Europäisches Patentamt

European Patent Office

Office européen des brevets

(19)

(11) Veröffentlichungsnummer: **0 213 117**
**A1**

(12) # EUROPÄISCHE PATENTANMELDUNG

(21) Anmeldenummer: 86890236.2

(22) Anmeldetag: 21.08.86

(51) Int. Cl.⁴: **B 01 D 53/34, C 01 D 9/06**

(30) Priorität: 22.08.85 AT 2462/85

(43) Veröffentlichungstag der Anmeldung: 04.03.87
Patentblatt 87/10

(84) Benannte Vertragsstaaten: AT BE CH DE FR GB IT LI LU
NL SE

(71) Anmelder: Envirotec AG, Am schrägen Weg 2,
FL-9490 Vaduz (LI)

(72) Erfinder: Schmid, Peter J., Ing., Neustiftgasse 93,
A-1070 Wien (AT)
Erfinder: Kranebitter, Franz, Dr., Neustiftgasse 93,
A-1070 Wien (AT)
Erfinder: Panning, Peter, Neustiftgasse 93, A-1070 Wien
(AT)

(74) Vertreter: Kliment, Peter, Dipl.-Ing. Mag.-jur.,
Singerstrasse 8, A-1010 Wien (AT)

(54) Verfahren zur Entfernung und Verwertung von Stickoxyden in Rauchgasen.

(57) Die Erfindung betrifft ein Verfahren zur Entfernung und
Verwertung von in Gasen, insbesondere Rauchgasen, vorliegenden Stickoxiden durch Oxidation derselben und nachfolgender Umsetzung der erhaltenen Lösungen zu Nitraten,
wobei erfindungsgemäß die Oxidation unter Bildung einer
grenzflächenaktiven dynamischen Schaumphase vor sich
gehen gelassen wird, die durch intensiven Gas-Flüssigkeitskontakt bewirkt wird.

Die Erfindung betrifft ein Verfahren zur Entfernung von Stickoxiden aus Gasgemischen, insbesondere Rauchgasen oder anderen Abgasen, z.B. denjenigen, die bei der Herstellung von Salpetersäure entstehen. Es sind viele Verfahren bekannt, nach welchen das in solchen Gasen vorliegende, in Wasser nur sehr wenig lösliche Stickstoffmonoxid mittels Sauerstoff oder Ozon zum Stickstoffdioxid oxidiert wird und dann das so gebildete Stickstoffdioxid gemeinsam mit den in den betreffenden Gasen noch vorhandenen Stickstoffoxiden durch wässerige Absorption entfernt wird.

Die in Betrieb stehenden Anlagen, bei denen derartige Abgase gebildet werden, zeigen jedoch, daß sich diese bekannten Verfahren in der Industrie nicht durchsetzen konnten.

Die Erfindung bietet ein Verfahren, nach welchem über 90 und bis zu 99,5 % der in den Gasen vorliegenden Stickoxide in einem Arbeitsgang nicht nur aus den Gasen entfernt werden, sondern im Sinne eines Recycling-Prozesses zu gut verwendbaren Nitraten umgewandelt werden. In erfindungsgemäß behandelten Gasen verbleiben etwa 50 ppm Stickoxide oder bei Inkaufnahme größerer Energieverluste auch noch weniger Stickoxide. Dieses Verfahren bietet daher einen sehr effektiven Umweltschutz.

Das erfindungsgemäße Verfahren zur Entfernung und Verwertung von in Gasen, insbesondere Rauchgasen, vorliegenden Stickoxiden durch Oxidation derselben in einer Gas-Flüssigkeit-Phase und Umsetzung der erhaltenen Lösungen zu Nitraten ist dadurch gekennzeichnet, daß die Oxidation der Gase und die Nitratbildung unter Kreislaufführung in einem Arbeitsgang erfolgt, wobei die Oxidation der Gase, die gewünschtenfalls zunächst über die Umsetzung von NO zu $NO_2$ bewirkenden Katalysatoren geleitet worden waren, unter Zuleitung von Luft, Sauerstoff oder Ozon oder Gemischen letzterer Gase und Wasser bei intensivem Gas-Flüssigkeits-Phasenkontakt unter Bildung einer grenzflächenaktiven dynamischen Schaumphase vor sich gehen gelassen wird; die sich bildende $HNO_3/HNO_2$-Lösung im Gegenstrom zu den stick-

3

0213117

stoffhaltigen Gasen zirkulieren gelassen und diese Lösung mit
einer Base, vorzugsweise Ammoniak unter Bildung eines Nitrates
umgesetzt wird, wobei das so erhaltene Nitrat abgeleitet wird.

Katalysatoren, die zur Oxidation von NO zu $NO_2$ verwendet werden, sind bekannt, vgl. z.B. Ch. Chu et al. Eng. Prog. 57(67)
51(1961).

Die Einhaltung eines möglichst intensiven Gas-Flüssigkeit-
Phasenkontaktes bei möglichst geringem Druckverlust ermöglicht
die Ausführung des erfindungsgemäßen Verfahrens in industriellem Ausmaß. Zur Erzielung dieses Effektes eignet sich insbesondere eine Vorrichtung, die in der veröffentlichten PCT-Anmeldung WO 82/03184 (veröffentlicht als EP Nr. 73801,
16.3.1983) beschrieben ist. Bei Ausführung des erfindungsgemäßen Verfahrens wird eine solche oder eine dieser ähnliche
Vorrichtung bevorzugt eingesetzt.

Bei solchen Vorrichtungen bestehen die Böden aus Kippelementen,
die mit Gegengewichten versehen sind, welche mithelfen, einen
hydrostatischen Druck der darüber lastenden Flüssigkeitssäule
zu überwinden. Die Höhe der Schaumphase ist 30 cm, wobei der
hydrostatische Druckverlust 0,06 bis 0,07 bar pro Kontaktboden
beträgt.

Bei Verwendung von Ozon oder ozonisierter Luft geht die Oxidation schneller vor sich als bei Verwendung von Sauerstoff. Ob
Ozon eingesetzt werden soll, wird von wirtschaftlichen Erwägungen abhängig sein.

Die Umsetzung der Salpetersäure mit Ammoniak wird vorzugsweise
bei über $75^{\circ}$ gelegenen Temperaturen durchgefuhrt, weil dann das
Ammoniumnitrit zu Stickstoff und Wasser zerfällt und hiedurch
der Entstickungsgrad verbessert wird.

Bei Verwendung von Ammoniak erhält man das als Dungemittel
verwendbare Ammoniumnitrat. Bei Nachfrage nach Natrium oder
Kalziumnitrat kann jedoch anstelle von Ammoniak, Natrium- oder
Kalziumhydroxid eingesetzt werden.

Das erfindungsgemäße Verfahren sei anhand eines Beispiels, das eine bevorzugte Ausführungsweise dieses Verfahrens zeigt, und anhand eines Schaltschemas näher erläutert.

### Voroxidation

Ein Teil der stickstoffhältigen Gase (z.B. Rauchgas oder Abgase einer $HNO_3$-Fabrikation) wird durch katalytische Oxidation zu $NO_2$ oxidiert.

### Oxidationskreislauf unter Verwendung von $O_2$ oder $O_3$:

Die sich bei der Oxidation bildende verdünnte $HNO_3/HNO_2$-Lösung zirkuliert in dem Reaktionsraum A im Gegenstrom über intensiv wirkende Phasenkontaktelemente mit den stickstoffhältigen Gasen, wobei das wasserlösliche $NO_2$ ausgewaschen wird. Dabei entsteht $HNO_3$, welches durch Wasserzusatz auf konstanter Konzentration gehalten wird, z.B. 50 %. Der Restanteil NO wird in den letzten Phasenkontaktböden mittels $O_2$ oder $O_3$ (Cl oder einem Gemisch von $O_2$ und $O_3$ zu $NO_2$ bzw. $N_2O_5$ oxidiert und ausgewaschen.

### Salzkreislauf:

Ein Teilstrom der kontinuierlich entstehenden $HNO_3/HNO_2$-Lösung wird im Gegenstrom zu dem bereits weitgehend entstickten Gas in den Reaktionsraum B umgeleitet. Durch Zusatz von $NH_3$ (aus D) reagiert die $HNO_3/HNO_2$-Lösung zu $NH_4NO_3/NH_4O_2$. Ein Teil des restlichen NO-Gehaltes im Gas reagiert mit vorliegendem $NO_2$ und $NH_4OH$ zu $NH_4NO_2$, das bei über 75°C gelegenen Temperaturen zu $N_2+H_2O$ zerfällt. Die $NH_4NO_3$-Lösung wird aus diesem Kreislauf kontinuierlich über den Verdampferturm E und dem Trockenturm F abgeführt; die Abluft wird durch das Ammoniakfilter G abgeleitet.

**P A T E N T A N S P R Ü C H E**

1. Verfahren zur Entfernung und Verwertung von in Gasen, insbesondere Rauchgasen, vorliegenden Stickoxiden durch Oxidation derselben in einer Gas-Flüssigkeit-Phase und Umsetzung der erhaltenen Lösungen zu Nitraten,

dadurch gekennzeichnet,

daß die Oxidation der Gase und die Nitratbildung unter Kreislaufführung in einem Arbeitsgang erfolgt, wobei die Oxidation der Gase, die gewünschtenfalls zunächst über die Umsetzung von NO zu $NO^2$ bewirkenden Katalysatoren geleitet worden waren, unter Zuleitung von Luft, Sauerstoff oder Ozon oder Gemischen letzterer Gase und Wasser bei intensivem Gas-Flüssigkeits-Phasenkontakt unter Bildung einer grenzflächenaktiven dynamischen Schaumphase vor sich gehen gelassen wird, die sich bildende $HNO^3/HNO^2$-Lösung im Gegenstrom zu den stickstoffhaltigen Gasen zirkulieren gelassen und diese Lösung mit einer Base, vorzugsweise Ammoniak unter Bildung eines Nitrates umgesetzt wird, wobei das so erhaltene Nitrat abgeleitet wird.

2. Verfahren nach Anspruch 1,

dadurch gekennzeichnet,

daß die Umsetzung der Salpetersäure mit Ammoniak bei 75$^\circ$C übersteigenden Temperaturen durchgeführt wird.

0213117
Nummer der Anmeldung

Europäisches
Patentamt

EUROPÄISCHER RECHERCHENBERICHT

EP 86 89 0236

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CHEMICAL ABSTRACTS, Band 80, Nr. 14, 8. April 1974, Seite 213, Zusamenfassung Nr. 73910h, Columbus, Ohio, US; JP-A-73 83 069 (OZAWA, TAMOTSU) 06-11-1973 * Zusammenfassung * | 1 | B 01 D 53/34 C 01 D 9/06 |
| A | CHEMICAL ABSTRACTS, Band 87, 1977, Seite 128, Zusammenfassung Nr. 25458q, Columbus, Ohio, US; & JP-A-77 00 918 (TOKUYAMA SODA CO., LTD.) 11-01-1977 | | |
| A | CHEMICAL ABSTRACTS, Band 85, 1976, Seite 306, Zusammenfassung Nr. 67485k, Columbus, Ohio, US; & JP-A-75 33 981 (MITSUBISHI ELECTRIC CORP.) 02-04-1975 | | |
| A | FR-A-2 360 339 (KOBE STEEL, LTD.) | | |
| A | FR-A-2 003 654 (FRIEDRICH UHDE GmbH) | | |
| A | US-A-3 960 507 (M. TSUJIKAWA) | | |
| A | EP-A-0 035 663 (NUKEM GmbH) | | |
|  | --- -/- | | |

| RECHERCHIERTE SACHGEBIETE (Int. Cl.4) |
|---|
| B 01 D C 01 D C 01 B C 01 C |

Der vorliegende Recherchenbericht wurde für alle Patentansprüche erstellt.

| Recherchenort DEN HAAG | Abschlußdatum der Recherche 14-11-1986 | Prüfer PYFFEROEN K. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82

EUROPÄISCHES PATENTAMT

Europäisches Patentamt

EUROPÄISCHER RECHERCHENBERICHT

0213117
Nummer der Anmeldung

EP  86 89 0236

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 026 418   (HOECHST AG) | | |
| A | US-A-4 219 536  (K.A. HOENKE) | | |
| A | GB-A- 401 121  (R.W. JAMES) | | |

RECHERCHIERTE SACHGEBIETE (Int. Cl.4)

Der vorliegende Recherchenbericht wurde für alle Patentansprüche erstellt.

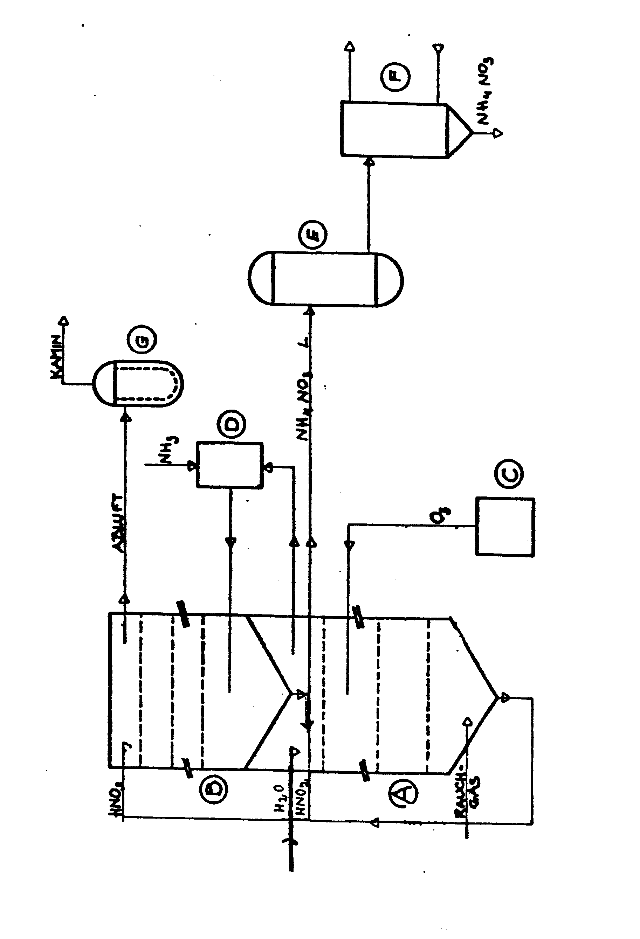

| Recherchenort | Abschlußdatum der Recherche | Prüfer |
|---|---|---|
| DEN HAAG | 14-11-1986 | PYFFEROEN K. |